Europäisches Patentamt

European Patent Office

Office européen des brevets

(11) Numéro de publication : **0 462 862 B1**

# (12) FASCICULE DE BREVET EUROPEEN

(45) Date de publication du fascicule du brevet :
03.08.94 Bulletin 94/31

(51) Int. Cl.⁵ : **B60K 41/04**

(21) Numéro de dépôt : **91401489.9**

(22) Date de dépôt : **07.06.91**

(54) **Procédé de commande de modulation du couple d'un moteur thermique associé à une boîte de vitesses automatique.**

(30) Priorité : **19.06.90 FR 9007628**

(43) Date de publication de la demande :
**27.12.91 Bulletin 91/52**

(45) Mention de la délivrance du brevet :
**03.08.94 Bulletin 94/31**

(84) Etats contractants désignés :
**BE DE ES FR GB IT**

(56) Documents cités :
**EP-A- 0 278 856**
**DE-A- 3 821 245**
**DE-A- 3 830 938**
**FR-A- 2 635 597**

(73) Titulaire : **REGIE NATIONALE DES USINES RENAULT S.A.**
**34, Quai du Point du Jour**
**F-92109 Boulogne Billancourt (FR)**

(72) Inventeur : **Leorat, François**
**18,Boulevard de la Reine**
**F-78000 Versailles (FR)**

EP 0 462 862 B1

Jouve, 18, rue Saint-Denis, 75001 PARIS

## Description

La présente invention se rapporte à un procédé de commande de modulation du couple d'un moteur thermique associé à une boîte de vitesses automatique, notamment pour véhicules automobiles de tourisme.

On sait que le principal problème rencontré avec les boîtes de vitesses automatiques est celui du confort des passages de vitesses : il convient en effet de réaliser un compromis entre la brièveté du temps de passage, et le confort du passage des vitesses.

La publication EP 0.011.088 décrit à ce sujet un procédé pour influencer un moteur à combustion interne et une installation pour la mise en application de ce procédé. Selon ce procédé, le couple moteur est réduit pendant les changements de vitesses entre deux valeurs de la vitesse de rotation du moteur, déterminées à partir de la vitesse de rotation du moteur lors du déclenchement du changement de vitesse. Cette technique de modulation, ou d'estompage du couple pendant les passages de vitesses est également illustrée par la publication FR 2.635.597 de la demanderesse. Ce document prévoit notamment de commander la modulation par l'intermédiaire d'un signal tout ou rien modulé en durée agissant, selon le type de moteur sur le boîtier d'allumage du moteur à allumage commandé, sur le boîtier de commande de la pompe Diesel électronifiée ou encore, si le moteur est Diesel turbo-compressé, sur une électrovanne pneumatique à trois voies faisant communiquer la chambre de travail du poumon de la pompe à injection avec l'atmosphère. Enfin un point important de la technique divulguée par ce document consiste en ce que lors des passages montants, la valeur de la vitesse de rotation du moteur prise en compte pour provoquer la modulation du couple n'est pas celle à l'instant du déclenchement du changement de vitesses, mais la valeur maximale atteinte postérieurement au déclenchement.

Le but de la présente invention est de proposer un procédé de commande de modulation du couple adapté à chaque type de moteur associé à une boîte de commande de vitesses, de manière à réduire le temps de passage à confort constant, ou à améliorer le confort sans augmenter le temps de passage.

L'invention concerne un procédé de commande du couple d'un moteur Diesel à pompe d'injection électronifiée, turbo compressé ou non, associé à une boîte de vitesses automatique dont le boîtier électronique de commande agit sur le boîtier de commande de la pompe Diesel électronifiée, au moyen d'une liaison unidirectionnelle et unifilaire par un signal unique tout ou rien dont le début et la fin sont déterminés par l'information vitesse moteur $\Omega_m$, de manière que:

$$\Omega_m^{début} = k_1 . \Omega_m^{max}$$

et

$$\Omega_m^{fin} = k_2 . \Omega_m^{max.}$$

$K_1$ et $K_2$ étant des constantes telles que $k_2 < k_1$ et $\Omega_m^{max}$ représentant la valeur maximale atteinte par la vitesse du moteur dans les premiers instants du passage du rapport N au rapport N + 1, de manière à réduire le couple moteur lors des passages de vitesses montants, et par un signal double composé de deux signaux élémentaires à niveau constant d'une durée égale à une durée de seuil Tseuil, le début du premier signal intervenant à l'issue d'une durée $T_1$ par rapport au début du passage du rapport N au rapport N - 1 ou N - 2, et les deux signaux élémentaires étant séparés par une durée $T_2$ telles que $T_1 = f_1$ (passage N/N-i, $\Omega m$) et $T_2 = f_2$ (passage N/N - i, $\Omega m$), où $f_1$ et $f_2$ sont fonctions du passage et de la vitesse du moteur et i = 1 ou 2, de manière à réduire le couple moteur lors des passages descendants. Ce procédé est caractérisé en ce que lors des passages montants, le signal unique en provenance du boîtier électronique de commande de la boîte de vitesses automatique provoque une réduction maximale de la consigne de débit de gazole jusqu'à une valeur minimale avec un front de montée et un front de descente abrupts, et en ce que lors des passages descendants, le premier signal en provenance du boîtier de commande électronique de la boîte de vitesses automatique provoque un front de descente abrupt du débit d'alimentation en gazole jusqu'à une consigne constante indépendante de celle de l'accélérateur, tandis que le second signal provoque une reprise progressive de la consigne de débit de gazole.

Selon un mode de réalisation de l'invention, lors des passages descendants, le premier signal intervient lorsque la vitesse moteur $\Omega_m$ est égale à une valeur $\Omega_m^e$ définie par la relation :

$$\Omega_m^e = \Omega_{V_h}^N \times \frac{R_{N-i}}{R_N} - (2\,T\,seuil + \varepsilon) . \dot{\Omega}_m$$

où $\Omega_{V_h}^N$ est la vitesse du moteur sur le rapport N juste avant le passage Rn - i, Rn sont les démultiplications respectives des rapports N - i, N et i = 1 ou 2, et $\dot{\Omega}_m$ le gradient de vitesse moteur pendant les passages,

2

et les deux signaux élémentaires sont séparés par une durée constante ε.

D'autres caractéristiques et avantages de la présente invention ressortiront de la description qui suit du mode de réalisation donné à titre d'exemple en référence aux dessins annexés sur lesquels:

- la figure 1 représente graphiquement la variation de la vitesse moteur et du signal de modulation en fonction du temps pour les passages montants,
- la figure 2 représente graphiquement l'évolution du débit de gazole durant un passage montant selon l'invention,
- la figure 3 représente graphiquement la variation de la vitesse moteur et du signal de modulation en fonction du temps pour les passages descendants dans le cas d'un moteur Diesel à pompe électronifiée,
- la figure 4, associée à la figure 3, représente l'évolution du débit de gazole durant un passage descendant avec un moteur Diesel à pompe électronifiée, dans le cas où la consigne du débit de gazole avant le passage est supérieure à la valeur de consigne pendant le passage,
- la figure 5, associée à la figure 3, représente l'évolution du débit de gazole durant un passage descendant avec un moteur Diesel à pompe électronifiée dans le cas où la consigne du débit de gazole avant le passage est inférieure à la valeur de consigne pendant le passage,
- la figure 6 représente la variation de la vitesse du moteur et du signal de modulation lors d'un passage descendant selon une variante de l'invention applicable à tout type de moteur,
- la figure 7, associée à la variante de la figure 6, représente l'évolution du débit de carburant durant un passage descendant dans le cas où la consigne de débit de gazole avant le passage est supérieure à la valeur de consigne pendant le passage,
- la figure 8, associée à la variante de la figure 6, représente l'évolution du débit de carburant durant un passage descendant dans le cas où la consigne de débit de carburant avant le passage est inférieure à la valeur de consigne pendant le passage.

Le procédé de commande de modulation du couple d'un moteur thermique selon l'invention concerne notamment une boîte de vitesses automatique gérée par un boîtier électronique de commande. Ce boîtier électronique de commande agit sur un organe de commande dudit moteur au moyen d'une liaison unidirectionnelle et unifilaire, par un signal de modulation du couple, afin d'agir sur le couple moteur lors du passage des vitesses.

Pour un moteur Diesel à pompe d'injection électronifiée, à aspiration naturelle ou turbo-compressé, le boîtier de commande de la pompe Diesel électronifiée est l'organe de commande qui reçoit le signal de modulation du couple en provenance du boîtier électronique de commande de la boîte de vitesses automatique.

Pour les passages en montant du rapport N au rapport N + 1, le signal de modulation est un signal unique à niveau constant d'une durée T. Cette durée T est comprise entre une durée minimale Tmin et une durée maximale T max. Le temps initial et le temps final sont déterminés par l'information vitesse moteur $\Omega_m$ de manière que:

$$\Omega_m^{début} = k_1 . \Omega_m^{max}$$

et

$$\Omega_m^{fin} = k_2 . \Omega_m^{max.}$$

$K_1$ et $k_2$ étant des constantes telles que $k_2 < k_1$ et $\Omega_m^{max}$ représentant la valeur maximale atteinte par la vitesse du moteur $\Omega_m$ dans les premiers instants du passage du rapport N au rapport N + 1.

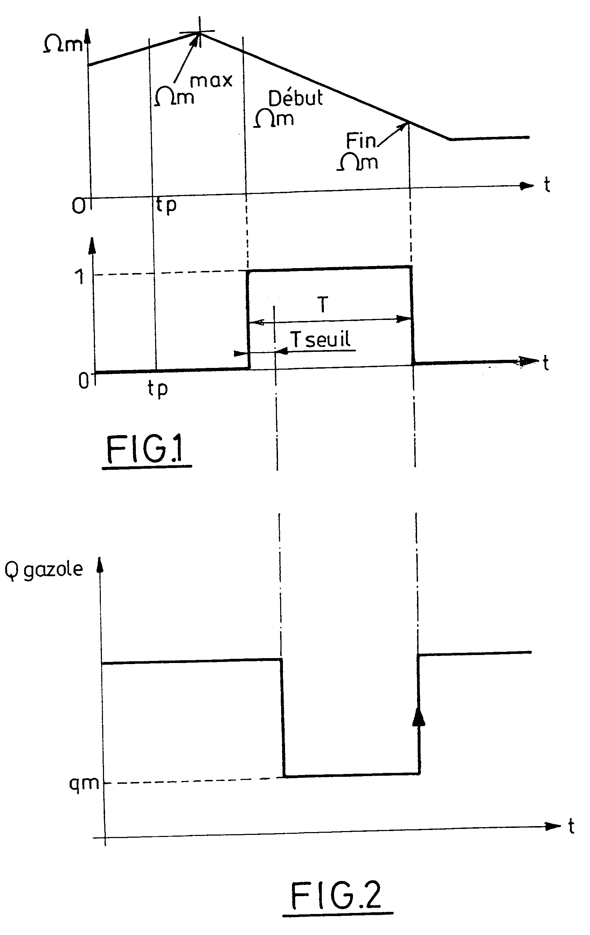

Comme il apparaît sur les figures 1 et 2, le signal unique de modulation de couple provoque une réduction maximale de la consigne de débit de gazole jusqu'à une valeur minimale $q_m$, les fronts de descente et de montée du signal de consigne de débit de gazole étant abrupts.

Pour les passages en descendant du rapport N au rapport N - 1 ou N - 2 du moteur Diesel à pompe d'injection électronifiée, le signal de modulation est un signal double composé de deux signaux élémentaires identiques à niveau constant d'une durée égale à Tseuil.

Le début du premier signal se produit à l'issue d'une durée $T_1$ par rapport au début du passage du rapport N au rapport N - 1 ou N - 2, et les deux signaux sont séparés par une durée $T_2$ telles que :

$$T_1 = f_1 (passage\ N/N - i, \Omega_m)$$
$$T_2 = f_2 (passage\ N/N - i, \Omega_m)$$

où $f_1$ et $f_2$ sont des fonctions 1 et 2 et i = 1,2.

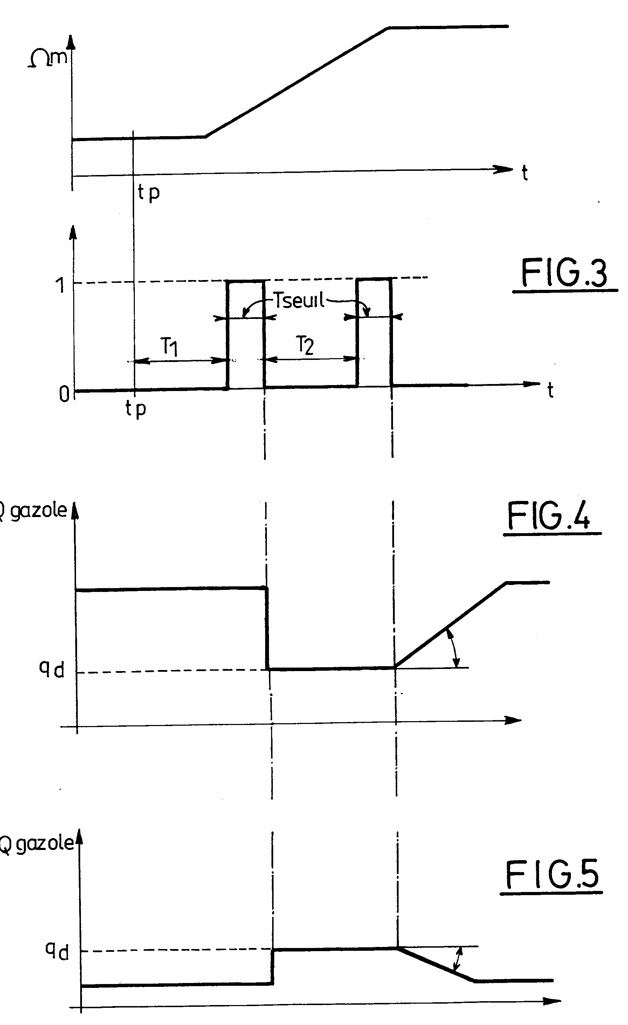

Comme il apparaît sur les figures 3, 4 et 5, le premier signal élémentaire provoque une consigne de débit de gazole constante $q_d$ quelle que soit la consigne de l'accélérateur, avec un front initial abrupt, et le second signal élémentaire provoque une reprise progressive.

Une variante de l'invention, applicable à tout type de moteur pour les passages en descendant du rapport N au raport N - 1 ou N - 2, se caractérise par un signal de modulation double composé de deux signaux élémentaires identiques à niveau constant d'une durée égale à une valeur Tseuil.

Les deux signaux élémentaires sont séparés par un temps constant $\varepsilon$, le signal de modulation étant déclenché lorsque la vitesse moteur $\Omega_m$ est égale à une valeur $\Omega_m^e$, définie par la relation:

$$\Omega_m^e = \Omega_{V_n}^N \times \frac{R_{N-i}}{R_N} - (2 \ T_{seuil} + \varepsilon) . \dot{\Omega}_m.$$

où :

$\Omega_{V_n}^N$ est la vitesse du moteur sur le rapport N juste avant le passage, tandis que Rn-i, Rn correspondent respectivement à la démultiplication des rapports N-i et N et $\dot{\Omega}_m$ est le gradient de vitesse moteur pendant le passage avec i = 1 ou 2.

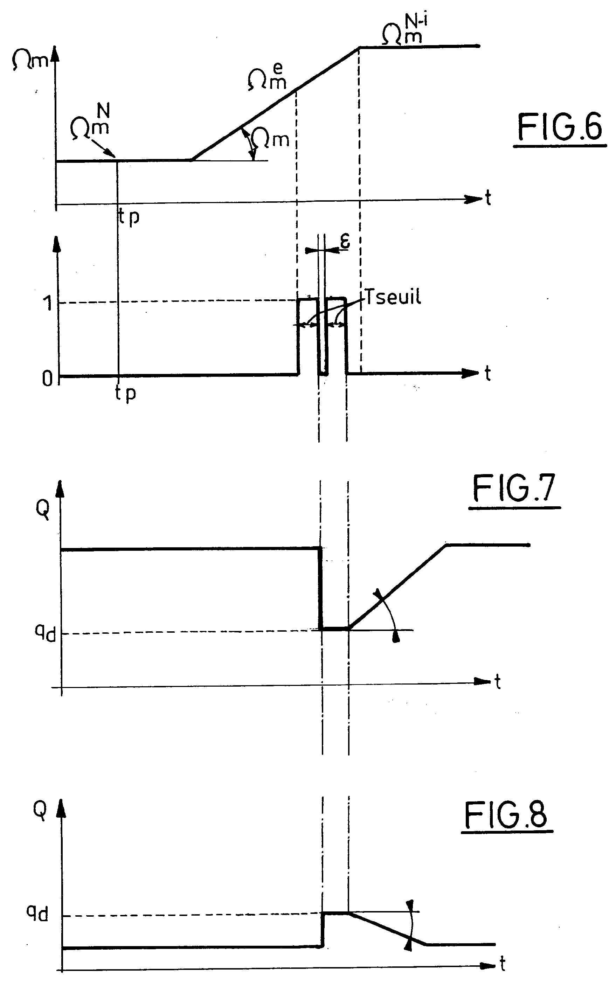

Comme il apparaît sur les figures 6, 7 et 8, le premier signal élémentaire provoque une consigne de débit de carburant constante $q_d$ quelle que soit la consigne de l'accélérateur, avec un front initial abrupt, et le second signal élémentaire provoque une reprise progressive de la consigne de débit de carburant.

**Revendications**

1. Procédé de commande du couple d'un moteur Diesel à pompe d'injection électronifiée, turbo compressé ou non, associé à une boîte de vitesses automatique dont le boîtier électronique de commande agit sur le boîtier de commande de la pompe Diesel électronifiée, au moyen d'une liaison unidirectionnelle et unifilaire par un signal unique tout ou rien dont le début et la fin sont déterminés par l'information vitesse moteur $\Omega_m$ de manière que:

$$\Omega_m^{début} = k_1 . \Omega_m^{max}$$

et

$$\Omega_m^{fin} = k_2 . \Omega_m^{max.}$$

$K_1$ et $K_2$ étant des constantes telles que $k_2 < k_1$ et $\Omega_m^{max}$ représentant la valeur maximale atteinte par la vitesse du moteur dans les premiers instants du passage du rapport N au rapport N + 1, de manière à réduire le couple moteur lors des passages de vitesses montants, et par un signal double composé de deux signaux élémentaires à niveau constant d'une durée égale à une durée de seuil Tseuil, le début du premier signal intervenant à l'issue d'une durée $T_1$ par rapport au début du passage du rapport N au rapport N - 1 ou N - 2, et les deux signaux élémentaires étant séparés par une durée $T_2$ telles que $T_1 = f_1$ (passage N/N-i, $\Omega_m$) et $T_2 = f_2$ (passage N/N - i, $\Omega$m), où $f_1$ et $f_2$ sont fonctions du passage et de la vitesse du moteur et i = 1 ou 2, de manière à réduire le couple moteur lors des passages descendants, caractérisé en ce que lors des passages montants, le signal unique en provenance du boîtier électronique de commande de la boîte de vitesses automatique provoque une réduction maximale de la consigne de débit de gazole jusqu'à une valeur minimale avec un front de montée et un front de descente abrupts, et en ce que lors des passages descendants, le premier signal en provenance du boîtier de commande électronique de la boîte de vitesses automatique provoque un front de descente abrupt du débit d'alimentation en gazole jusqu'à une consigne constante indépendante de celle de l'accélérateur, tandis que le second signal provoque une reprise progressive de la consigne de débit de gazole.

2. Procédé de commande selon la revendication 1, caractérisé en ce que lors des passages descendants, le premier signal lorsque la vitesse moteur $\Omega_m$ est égale à une valeur $\Omega_m$ définie par la relation :

$$\Omega_m^e = \Omega_{V_h}^N \times \frac{R_{N-i}}{R_N} - (2 \ T \ seuil + \varepsilon) . \dot{\Omega}_m$$

où $\Omega_{V_n}^N$ est la vitesse du moteur sur le rapport N juste avant le passage Rn - i, Rn sont les démultiplications respectives des rapports N - i, N et i = 1 ou 2, et $\Omega_m$ le gradient de vitesse moteur pendant les passages, et en ce que les deux signaux élémentaires sont séparés par une durée constante $\varepsilon$.

4

## Patentansprüche

1. Verfahren zur Steuerung des Drehmoments eines Dieselmotors mit elektronischer Einspritzpumpe, mit einem Turbokompressor oder nicht, der einem automatischen Getriebe zugeordnet ist, dessen elektronischer Steuerkasten auf den Steuerkasten der elektronischen Dieselpumpe wirkt mittels einer eindrahtigen Einrichtungsverbindung und eines einzigen alles-oder-nichts-Signals, dessen Anfang und Ende durch eine Information über die Motorgeschwindigkeit $\Omega m$ wie folgt bestimmt werden:

$$\Omega_m^{Anfang} = k_1 \times \Omega_m^{max}$$
$$\Omega_m^{Ende} = k_2 \times \Omega_m^{max}$$

wobei für die Konstanten $k_1$ und $k_2$ gilt, daß $k_2 < k_1$ ist und $\Omega_m^{max}$ den Maximalwert der Motorgeschwindigkeit während der ersten Augenblicke des Wechsels vom Gang N zum Gang N+1 darstellt, so daß das Motordrehmoment während des Wechsels zu größeren Gängen reduziert wird und durch ein Doppelsignal, das sich aus zwei Elementarsignalen mit konstantem Pegel zusammensetzt, deren Dauer gleich der Dauer der Schwelle Tseuil ist, wobei der Beginn des ersten Signals auftritt nach Ablauf einer Dauer $T_1$ bezüglich des Beginns des Wechsels vom Gang N zum Gang N-1 oder N-2 und die beiden Elementarsignale durch eine Dauer $T_2$ getrennt sind, so daß $T_1=f_1$ (Wechsel N/N-i,$\Omega m$) oder $T_2=f_2$ (Wechsel N/N-i,$\Omega m$) ist, wobei $f_1$ und $f_2$ Funktionen sind des Wechsels und der Motorgeschwindigkeit und i= 1 oder 2 ist, so daß das Motordrehmoment während des Wechsels zu kleineren Gängen reduziert wird, dadurch gekennzeichnet, daß während des Wechsels zu größeren Gängen das vom elektronischen Steuerkasten des automatischen Getriebes stammende einzige Signal eine maximale Reduzierung des Wertes der Gasölmenge bewirkt, bis hin zu einem Minimalwert bei steiler Anstiegsflanke und steiler Abstiegsflanke und daß während des Wechsels zu kleineren Gängen das vom elektronischen Steuerkasten des automatischen Getriebes stammende Erstsignal eine steile Abstiegsflanke der Versorgungsmenge an Gasöl bewirkt, bis hin zu einem konstanten Wert unabhängig von demjenigen des Beschleunigungspedals, während das zweite Signal eine wachsende Zunahme des Wertes der Gasölmenge bewirkt.

2. Verfahren zur Steuerung nach Anspruch 1, dadurch gekennzeichnet, daß während des Wechsels zu kleineren Gängen das erste Signal erscheint während die Motorgeschwindigkeit $\Omega m$ gleich einem Wert $\Omega_m^e$ ist, der durch die folgende Beziehung definiert ist:

$$\Omega_m^e = \Omega_{V_h}^N \times \frac{R_{N-i}}{R_N} - (2\, T\, seuil + \varepsilon)\, \dot{\Omega}m$$

wobei $\Omega_{V_h}^N$ die Motorgeschwindigkeit im Gang N ist unmittelbar vor dem Wechsel, Rn-i, Rn entsprechende Übersetzungen der Gänge N-i, N sind und i = 1 oder 2 ist und $\dot{\Omega}m$ der Gradient der Motorgeschwindigkeit während der Wechsel ist und daß die beiden Elementarsignale durch eine konstante Dauer $\varepsilon$ getrennt sind.

## Claims

1. A torque control method for a diesel engine with an electronic injection pump, which may or may not be turbocompressed, associated with an automatic transmission whose electronic control housing acts on the control housing of the electronic diesel pump by means of a one-way and single-wire connection via a single all or nothing signal whose beginning and end are determined by the engine speed information $\Omega_m$ such that:

$$\Omega_m^{beginning} = k_1 \cdot \Omega_m^{max}$$

and

$$\Omega_m^{end} = k_2 \cdot \Omega_m^{max.}$$

$K_1$ and $K_2$ being constants such that $K_2 < K_1$ and $\Omega_m^{max}$ represents the maximum value achieved by the engine speed in the initial moments of the shift from the ratio N to the ratio N+1 so as to reduce the engine torque during upward gear shifts and by a double signal made up of two elementary signals of constant level of a duration equal to a threshold duration Tthreshold, the beginning of the first signal taking place at the end of a duration $T_1$ with respect to the beginning of the shift from the ratio N to the ratio N-1 or N-2, and the two elementary signals being separated by a duration $T_2$ such that $T_1 = f_1$ (shift N/N-i, $\Omega$m) and $T_2 = f_2$ (shift N/N-i, $\Omega$m) in which $f_1$ and $f_2$ are functions of the shift and the engine speed and i = 1 or 2, so as to reduce the engine torque during downward shifts, characterized in that during upward shifts, the single signal from the electronic control housing of the automatic transmission causes a maximum reduction of the diesel oil flow reference to a minimum value with an abrupt leading edge and trailing edge and in that during downward shifts, the first signal from the electronic control housing of the automatic transmission causes an abrupt trailing edge in the rate of supply of diesel oil to a constant reference independent of that of the accelerator, while the second signal causes a progressive recovery of the diesel oil flow reference.

2. A control method as claimed in claim 1, characterized in that during downward shifts, the first signal takes place when the engine speed $\Omega_m$ is equal to a value $\Omega_m{}^e$ defined by the relation:

$$\Omega_m{}^e = \Omega_{Vh}{}^N \times R_{N-i}/R_N - (2\ T\ threshold + \varepsilon) \cdot \overset{\bullet}{\Omega}m$$

in which $\Omega_{Vh}{}^N$ is the engine speed at the ratio N just prior to the shift, Rn-i, Rn are the respective demultiplications of the ratios N-i, N and i = 1 or 2 and $\Omega$m the gradient of the engine speed during the shifts, and in that the two elementary signals are separated by a constant duration $\varepsilon$.

FIG.1

FIG.2

7

FIG.3

FIG.4

FIG.5

_FIG.6_

_FIG.7_

_FIG.8_